# EUROPEAN PATENT APPLICATION

(11) **EP 2 397 206 A1**
(43) Date of publication of application: **21.12.2011**
(21) Application number: 11153629.8
(22) Date of filing: 08.02.2011
(51) Int. Cl.: B01D 17/02, C10G 33/00, E21B 43/34

(54) **Separator for separating a feed stream comprising at least three liquid phases**

(71) Applicant: Shell Internationale Research Maatschappij B.V., 2596 HR The Hague (NL)
(72) Inventor: Mans, Jeroen, 1031 HW Amsterdam (NL); Polderman, Hugo Gerardus, 1031 HW Amsterdam (NL)
(74) Representative: Matthezing, Robert Maarten

(57) **Abstract**

The present invention provides a separator (1) for separating a feed stream (10) comprising at least three liquid phases into at least three different liquid streams (20,30,40), the separator (1) comprising:
- an inlet (2) for receiving the feed stream (10);
- a first compartment (3) having a first overflow weir (31), a second overflow weir (32) and an underflow weir (33);
- a second compartment (4) that can receive liquid overflowing the second overflow weir (32) of the first compartment (3), the second compartment (4) having an outlet (41);
- a third compartment (5) that can receive liquid overflowing the first overflow weir (31) of the first compartment (3), the third compartment (5) having a first overflow weir (51), a second overflow weir (52) and an underflow weir (53);
- a fourth compartment (6) that can receive liquid overflowing the second overflow weir (52) of the third compartment (5), the fourth compartment (6) having an outlet (61); and
- a fifth compartment (7) that can receive liquid overflowing the first overflow weir (51) of the third compartment (5), the fifth compartment having an outlet (71) .

## Description

The present invention relates to a separator and a method for separating a feed stream comprising at least three liquid phases.

In the prior art various separators are known, such as gas/liquid separators, gas/solid separators, liquid/solid separators, etc.

There is a constant desire for new and alternative separators.

It is an object of the present invention to provide an alternative separator, in particular for separating a feed stream comprising at least three liquid phases.

It is a further object of the present invention to provide a separator for a feed stream that has been obtained from an oil well that has been subjected to chemical Enhanced Oil Recovery (chemical EOR).

One or more of the above or other objects are achieved according to the present invention by providing a separator for separating a feed stream comprising at least three liquid phases into at least three different liquid streams, the separator comprising:
- an inlet for receiving the feed stream;
- a first compartment having a first overflow weir, a second overflow weir and an underflow weir;
- a second compartment that can receive liquid overflowing the second overflow weir of the first compartment, the second compartment having an outlet;
- a third compartment that can receive liquid overflowing the first overflow weir of the first compartment, the third compartment having a first overflow weir, a second overflow weir and an underflow weir;
- a fourth compartment that can receive liquid overflowing the second overflow weir of the third compartment, the fourth compartment having an outlet; and
- a fifth compartment that can receive liquid overflowing the first overflow weir of the third compartment, the fifth compartment having an outlet.

An advantage of the present invention is that feed streams comprising at least three liquid phases can be separated in a very simple way, minimizing or even avoiding the need of flow controllers, level controllers and the like and avoiding risk of re-emulsification.

A further advantage of the present invention is that, in particular in the case wherein the feed stream has been obtained from an oil well that has been subjected to chemical EOR, the majority of the water and oil can be removed and the processing of the phase comprising an emulsion of water and oil (possibly also containing detergents and/or chemicals as used during the EOR) can be performed on a much smaller stream.

According to the present invention, the feed stream to be separated comprises at least three different liquid phases. In addition to the at least three liquid phases, the feed stream may contain one or more gases as well as solid materials, although it is preferred that any solid material has been removed before entering the separator to avoid clogging. Typically, the feed stream comprises at least three liquid phases having a different density. Preferably, the feed stream comprises at least a first, second and third liquid phase wherein the density of the first liquid phase is greater than the density of the second liquid phase and wherein the density of the second liquid phase is greater than the density of the third liquid phase.

Preferably the feed stream has been obtained from an oil well that has been subjected to chemical EOR. As chemical EOR is known in the prior art, this is not further described here. An exemplary chemical EOR process has been described in J.R. Barnes et al., "Developments of Surfactants for Chemical Flooding at Difficult Reservoir Conditions", SPE-113313-PP and presented at the 2008 SPE Improved Oil Recovery Symposium as held in Tulsa, Oklahoma, US on 19-23 April 2008, the teaching of which is hereby incorporated by reference.

Preferably, the feed stream to be separated comprises at least water as the first liquid phase, an emulsion of water and oil as the second liquid phase and oil as the third liquid phase. According to the present invention, the term "oil" is intended to refer to the liquid hydrocarbon-containing composition produced in a well; the person skilled in the art will understand that the composition of the liquid hydrocarbon-containing composition may vary broadly (e.g. dependent on the well) and may contain some solid material dispersed in it.

It is preferred according to the present invention that the inlet of the separator feeds into the first compartment, preferably between the first overflow weir and the underflow weir of the first compartment. This prevents or minimizes the chance that the first liquid phase that is intended to overflow the second overflow weir of the first compartment in fact overflows the first overflow weir of the first compartment thereby entering the third compartment.

The person skilled in the art readily understands that the overflow weirs and underflow weirs can be embodied in various ways. In a preferred embodiment the overflow and underflow weirs comprise substantially vertically arranged baffles which may be connected to the inner wall of the separator.

Also, the separator may take various shapes, e.g. having a substantially cylindrical shaped horizontally or vertically oriented outer wall. Preferably the separator has a substantially cylindrical shaped horizontally oriented outer wall.

In another aspect the present invention provides a method for separating a feed stream comprising at least three liquid phases into at least three different liquid streams, the method comprising at least the steps of:
(a) feeding the feed stream at an inlet of a separator into a first compartment;
(b) allowing a first liquid phase to overflow a second overflow weir of the first compartment to enter a second compartment and removing the first liquid phase in the second compartment from the separator via an outlet;
(c) allowing a second and third liquid phase to overflow a first overflow weir of the first compartment to enter a third compartment;
(d) allowing the second liquid phase in the third compartment to overflow a second overflow weir of the third compartment to enter a fourth compartment and removing the second liquid phase in the fourth compartment from the separator via an outlet;
(e) allowing the third liquid phase in the third compartment to overflow a first overflow weir of the third compartment to enter a fifth compartment and removing the third liquid phase in the fifth compartment from the separator via an outlet.

Preferably the feed stream entering the first compartment of the separator has a low velocity in order to avoid that some of the phases (such as the water and oil phases) undergo emulsification; a typical velocity for the feed stream is below 1.0 m/s, preferably below 0.5 m/s.

As indicated above, preferably the density of the first liquid phase is greater than the density of the second liquid phase and wherein the density of the second liquid phase is greater than the density of the third liquid phase. Also it is preferred that the first liquid phase comprises water, the second liquid phase comprises an emulsion of water and oil and the third liquid phase comprises oil. It is even further preferred that the feed stream is obtained from a well that has been subjected to chemical Enhanced Oil Recovery (chemical EOR).

According to a preferred embodiment the first liquid phase, after being fed to the first compartment and before overflowing the second overflow weir of the first compartment underflows an underflow weir. Also it is preferred that the second liquid phase, after entering the third compartment and before overflowing the second overflow weir of the third compartment underflows an underflow weir.

According to an especially preferred embodiment of the present invention the feed stream has a temperature below the boiling temperature of water at the prevailing pressure. Preferably, the separator according to the present invention is operated at a pressure of from ambient pressure to about 10 bar, preferably below 5 bar.

Hereinafter the invention will be further illustrated by the following non-limiting drawing. Herein shows:
Fig. 1 schematically a schematic top view of a first embodiment of a separator in accordance with the present invention;
Fig. 2 schematically a schematic side view of the separator of Fig. 1 when seen along axis A-A;
Fig. 3 schematically a schematic side view of the separator of Fig. 1 when seen along axis B-B; and
Fig. 4 schematically a schematic side view of a second embodiment of a separator in accordance with the present invention.

For the purpose of this description, same reference numbers refer to similar components.

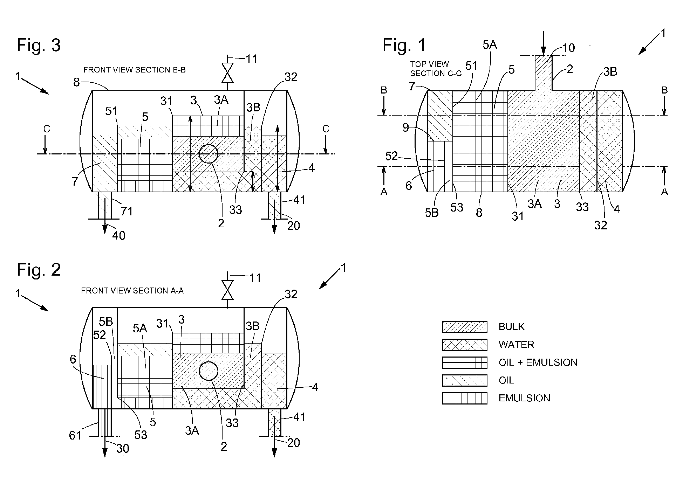

Figures 1-3 schematically show a separator 1 for separating a feed stream 10 comprising at least three liquid phases (the density of the first liquid phase being greater than the density of the second liquid phase the density of the second liquid phase being greater than the density of the third liquid phase) into at least three different liquid streams.

Preferably, the feed stream 10 is obtained from a well (not shown) that has been subjected to chemical EOR. In the latter case, the feed stream 10 is separated in the separator 1 to obtain three liquid phases which are removed from the separator 1; the first liquid phase comprises water, the second liquid phase comprises an emulsion of water and oil and the third liquid phase comprises oil.

In the embodiment of Figure 1, the separator 1 has a substantially cylindrical shaped horizontally oriented outer wall 8. The separator 1 comprises an inlet 2 for receiving the feed stream 10, which inlet is typically positioned at the side of the separator and three outlets 41, 61 and 71 (for respectively water, emulsion of water and oil, and oil). It goes without saying that the separator 1 may have further inlets and outlets if needed, e.g. for feeding or removing further liquid (typically at the bottom of the separator 1) or gaseous streams (typically at the top of the separator 1, such as degassing outlet 11).

Further, the separator 1 comprises first, second, third, fourth and fifth compartments 3-7. Again, further compartments may be present, if needed.

The first compartment 3 has a first overflow weir 31, a second overflow weir 32 and an underflow weir 33. The underflow weir 33 divides the first compartment 3 into first and second zones 3A and 3B. In case the separator 1 is intended for the separation of a feed stream obtained from a well that has been subjected to chemical EOR, then the volume contained in zone 3A between the first overflow weir 31 and the underflow 33 is typically above 1000 liter (1).

The second overflow weir 32 is preferably positioned lower than the first overflow weir 31. Also, the second overflow weir 32 is positioned downstream of the underflow weir 33, when determined for the first liquid phase (having the highest density in first compartment 3) that is to overflow the second overflow weir 32 from zone 3B to enter second compartment 4.

The second compartment 4 can receive liquid (i.e. the first liquid phase) present in zone 3B and overflowing the second overflow weir 32 of the first compartment 3. The second compartment 4 has an outlet 41 for removing the first liquid phase from the separator 1.

The third compartment 5 can receive liquid (i.e. second and third liquid phases) present in zone 3A and overflowing the first overflow weir 31 of the first compartment 3. The third compartment 5 has a first overflow weir 51, a second overflow weir 52 and an underflow weir 53. The underflow weir 53 divides the third compartment 5 into a first and second zones 5A and 5B.

The second overflow weir 52 is preferably positioned lower than the first overflow weir 51. Also, the second overflow weir 52 is positioned downstream of the underflow weir 53, when determined for the second liquid phase (having the highest density in third compartment 5) that is to overflow the second overflow weir 52 from zone 5B to enter fourth compartment 6.

The fourth compartment 6 can receive liquid (i.e. second liquid phase) present in zone 5B and overflowing the second overflow weir 52 of the third compartment 5. The fourth compartment 6 has an outlet 61 for removing the second liquid phase from the separator 1.

The fifth compartment 7 can receive liquid (i.e. third liquid phase) present in zone 5A and overflowing the first overflow weir 51 of the third compartment 5. The fifth compartment has an outlet 71 for removing the third liquid phase from the separator 1.

Between the fourth compartment 6 and the fifth compartment 7 a vertically arranged separation plate 9 is placed, which separation plate 9 extends substantially axially and/or substantially parallel to the axis of the separator 1. Preferably, the separation plate 9 is connected to both the bottom and top wall of the separator 1.

Preferably, and as shown in Fig. 1, the inlet 2 feeds into the first compartment 3, and preferably in zone 3A between the first overflow weir 31 and the underflow weir 33 of the first compartment 3. Also, it is preferred that the overflow and underflow weirs comprise substantially vertically arranged baffles. In the embodiment of Figs. 1-3, the overflow weirs are connected to the bottom wall of the separator 1, whilst the underflow weirs are connected to the top wall of the separator 1. The person skilled in the art will readily understand how to select the relative heights of the underflow and overflow weirs dependent on e.g. the densities of the various phases to be separated.

During use of the separator 1 of Figures 1-3, the feed stream 10 is fed at the inlet 2 of the separator 1 into the first compartment 3 (indicated as "bulk" in the Figures). In the case that the feed stream is obtained from a well subjected to chemical EOR at least three liquid phases are removed from the separator 1; the first liquid phase comprises water, the second liquid phase comprises an emulsion of water and oil and the third liquid phase comprises oil. Further phases such as liquid phases and gaseous phases may be present in the feed stream 10, although any solid material is preferably removed in advance. Also some mixtures of phases (such as the "bulk" fed at inlet 2 and the (mixture of) "oil and emulsion" present in the first compartment 3 and third compartment 5) may be present which separate by means of gravitation whilst being processed in the separator 1.

The first liquid phase (water; being the heaviest phase) at least partially underflows weir 33 of the first compartment 3 and is - from zone 3B - allowed to overflow the second overflow weir 32 of the first compartment 3 to enter the second compartment 4. Subsequently, the first liquid phase in the second compartment 4 is removed from the separator 1 as stream 20 via the outlet 41.

The second liquid phase (emulsion of water and oil) and the third liquid phases (oil) overflow - from zone 3A - the first overflow weir 31 of the first compartment 3 to enter the third compartment 5. The second liquid phase (emulsion of water and oil; being the heaviest phase in compartment 5) at least partially underflows weir 53 of the third compartment and is - from zone 5B of the third compartment 5 - allowed to overflow the second overflow weir 52 of the third compartment 5 to enter the fourth compartment 6. The second liquid phase (emulsion of water and oil) in the fourth compartment 6 is removed from the separator 1 as stream 30 via outlet 61. The emulsion of water and oil may be subjected to further treatment in order to remove the oil therefrom, such as by increasing or lowering the pH, removing the detergents, etc.

In zone 5A of the third compartment 5 the third liquid phase (oil) is allowed to overflow the first overflow weir 51 of the third compartment 5 to enter the fifth compartment 7. The third liquid phase (oil) in the fifth compartment 7 is removed from the separator 1 as stream 40 via outlet 71.

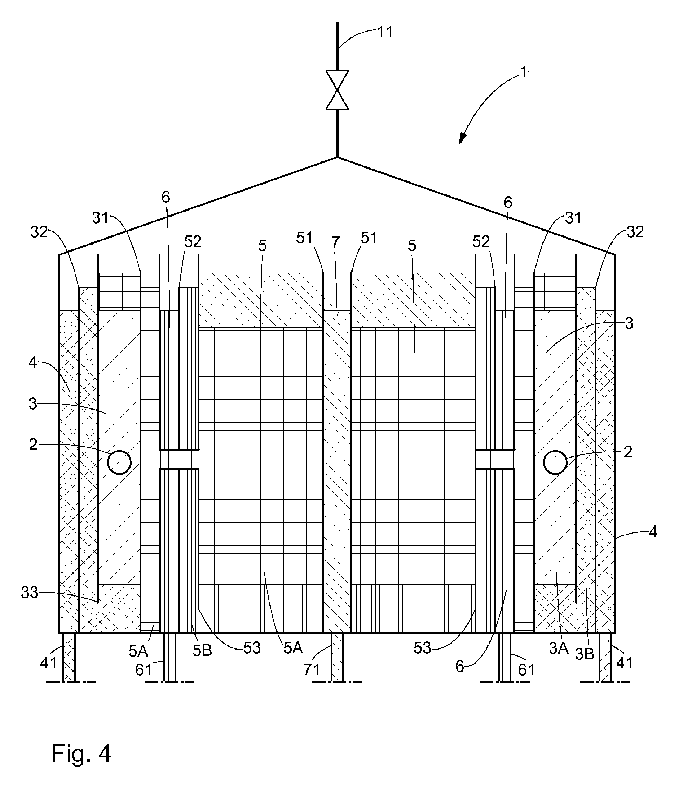

Fig. 4 schematically shows a schematic side view of a second embodiment of a separator in accordance with the present invention, in which the separator 1 is in the form of a tank and hence has a substantially cylindrical shaped vertically oriented outer wall 8.

The person skilled in the art will readily understand that many modifications may be made without departing from the scope of the invention. As an example, the feed stream 10 preferably has a temperature below the boiling temperature of water at the prevailing pressure, preferably in the range of from 30 to 95°C, preferably from 50 to 90°C, in order to expedite the separation between the water and the other liquid phases.

Also, although the separator 1 according to the present invention is preferably kept as simple as possible, the separator 1 may comprises heaters in e.g. zone 5A. Also, the separator 1 may have inlets for gases or liquids which may help in separation of the various liquid phases.

## Claims

1. A separator (1) for separating a feed stream (10) comprising at least three liquid phases into at least three different liquid streams (20,30,40), the separator (1) comprising:
- an inlet (2) for receiving the feed stream (10);
- a first compartment (3) having a first overflow weir (31), a second overflow weir (32) and an underflow weir (33);
- a second compartment (4) that can receive liquid overflowing the second overflow weir (32) of the first compartment (3), the second compartment (4) having an outlet (41);
- a third compartment (5) that can receive liquid overflowing the first overflow weir (31) of the first compartment (3), the third compartment (5) having a first overflow weir (51), a second overflow weir (52) and an underflow weir (53);
- a fourth compartment (6) that can receive liquid overflowing the second overflow weir (52) of the third compartment (5), the fourth compartment (6) having an outlet (61); and
- a fifth compartment (7) that can receive liquid overflowing the first overflow weir (51) of the third compartment (5), the fifth compartment having an outlet (71) .

2. The separator (1) according to claim 1, wherein the inlet (2) feeds into the first compartment (3), preferably between the first overflow weir (31) and the underflow weir (33) of the first compartment (3).

3. The separator (1) according to claim 1 or 2, wherein the overflow and underflow weirs comprise substantially vertically arranged baffles.

4. A method for separating a feed stream (10) comprising at least three liquid phases into at least three different liquid streams (20,30,40), the method comprising at least the steps of:
(a) feeding the feed stream (10) at an inlet (2) of a separator (1) into a first compartment (3);
(b) allowing a first liquid phase to overflow a second overflow weir (32) of the first compartment (3) to enter a second compartment (4) and removing the first liquid phase in the second compartment (4) from the separator (1) via an outlet (41);
(c) allowing a second and third liquid phase to overflow a first overflow weir (31) of the first compartment (3) to enter a third compartment (5);
(d) allowing the second liquid phase in the third compartment (5) to overflow a second overflow weir (52) of the third compartment (5) to enter a fourth compartment (6) and removing the second liquid phase in the fourth compartment (6) from the separator (1) via an outlet (61);
(e) allowing the third liquid phase in the third compartment (5) to overflow a first overflow weir (51) of the third compartment (5) to enter a fifth compartment (7) and removing the third liquid phase in the fifth compartment (7) from the separator (1) via an outlet (71) .

5. The method according to claim 4, wherein the density of the first liquid phase is greater than the density of the second liquid phase and wherein the density of the second liquid phase is greater than the density of the third liquid phase.

6. The method according to claim 4 or 5, wherein the first liquid phase comprises water, the second liquid phase comprises an emulsion of water and oil and the third liquid phase comprises oil.

7. The method according to any one of claims 4-6, wherein the feed stream (10) is obtained from a well that has been subjected to chemical Enhanced Oil Recovery (chemical EOR).

8. The method according to any one of claims 4-7, wherein the first liquid phase, after being fed to the first compartment (3) and before overflowing the second overflow weir (32) of the first compartment (3) underflows an underflow weir (33).

9. The method according to any one of claims 4-8, wherein the second liquid phase, after entering the third compartment (5) and before overflowing the second overflow weir (52) of the third compartment (5) underflows an underflow weir (53).

10. The method according to any one of claims 4-9, wherein the feed stream (10) has a temperature below the boiling temperature of water at the prevailing pressure, preferably in the range of from 30 to 95°C.
